Europäisches Patentamt

European Patent Office

Office européen des brevets

(19)

(11) Veröffentlichungsnummer: **0 086 413**
A2

(12) **EUROPÄISCHE PATENTANMELDUNG**

(21) Anmeldenummer: 83101055.8

(22) Anmeldetag: 04.02.83

(51) Int. Cl.³: **B 27 B 19/00**

(30) Priorität: **13.02.82 DE 3205231**

(43) Veröffentlichungstag der Anmeldung: **24.08.83**
**Patentblatt 83/34**

(84) Benannte Vertragsstaaten: **AT BE CH DE FR GB IT LI LU NL SE**

(71) Anmelder: **ALFER aluminium-fertigbau GmbH, Postfach 1 Industriestrasse 7, D-7896 Wutöschingen-Horheim (DE)**

(72) Erfinder: **Wilbs, Alfred, Wiesenstrasse 5, D-7896 Wutöschinen (DE)**

(74) Vertreter: **Hübner, Hans-Jürgen, Dipl.-Ing., Mozartstrasse 21, D-8960 Kempten (DE)**

(54) **Tischbügelsäge.**

(57) Eine Tischbügelsäge (10) hat einen U-förmigen Rahmen (12, 14, 16), in dessen beiden Horizontalschenkeln (12, 14) jeweils ein Wipparm (18; 20) schwenkbar gelagert ist. Der Schwenkradius des oberen Wipparms (18) ist halb so groß wie der Schwenkradius des unteren Wipparms (20). An jedem der beiden Wipparme greift eine Zugfeder (32; 36) an. Beide Federn halten das an den Vorderenden der Wipparme eingehängte Sägeblatt (30) auf Spannung. Der untere Wipparm wird mittels eines Kurbelantriebes (40) angetrieben.

Das Wipparmsystem (18, 20) ist von der Länge der Rahmenschenkel unabhängig und kann somit für unterschiedlich große Typen verwendet werden. Die unterschiedlichen Wipparmlängen bewirken eine Pendelbewegung des Sägeblattes und führen zu einer hohen Sägeleistung.

Bezeichnung : Tischbügelsäge

Die Erfindung betrifft eine Tischbügelsäge mit einem, aus zwei horizontalen Schenkeln und einem vertikalen Joch bestehenden U-förmigen Rahmen, in dessen erstem Schenkel ein erster Wipparm und in dessen zweitem Schenkel ein zweiter Wipparm schwenkbar gelagert sind, wobei der erste Wipparm mit einem Exzenter- oder Kurbelwellenantrieb in Verbindung steht und an den Vorderenden beider Wipparme ein Sägeblatt eingehängt ist und mit einer, an mindestens einem der beiden Wipparme angreifenden Federanordnung, welche das im wesentlichen vertikal gehalterte Sägeblatt unter Spannung hält.

Bei einer bekannten Tischbügelsäge dieser Art erstrecken sich die beiden Wipparme über die gesamte Länge der Rahmenschenkel. Die Hinterenden der Wipparme sind durch eine gemeinsame Feder miteinander verbunden, die im Rahmenjoch angeordnet ist. Nachteilig ist dabei, daß für verschiedene Rahmengrößen entsprechend der unterschiedlichen Schenkellängen auch unterschiedlich lange Wipparme benötigt werden. Eine rationelle Fertigung verschiedener Größen ist daher nicht möglich. Die Wipparme haben aufgrund ihrer notwendigen Länge relativ grosse Massen, die einen starken Antriebsmotor und entsprechend große Unwucht-Ausgleichsgewichte erforderlich
machen. Das Sägeblatt wird exakt rechtwinklig zur
Tischplatte geführt, da die Wipparme gleich lang
sind. Diese Ausbildung macht sich nachteilig auf
die Sägeleistung und die Späneabfuhr bemerkbar.

Aufgabe der vorliegenden Erfindung ist es die bekannte Tischbügelsäge dahingehend zu verbessern,
daß sie mit geringeren Kosten rationeller gefertigt
werden kann, eine geringere Antriebsleistung benötigt
und eine bessere Sägeleistung ergibt.

Diese Aufgabe wird erfindungsgemäß dadurch gelöst, daß
die zwischen dem Vorderende des Wipparms und dessen
Schwenklager gemessene wirksame Länge des einen Wipparms größer als die des anderen Wipparms ist und daß
die Federanordnung eine Feder aufweist, deren eines
Ende am zweiten Wipparm und deren anderes Ende am zweiten Schenkel angreift.

Weiterbildungen der Erfindung bestehen darin, daß die
wirksame Länge des längeren Wipparms etwa doppelt so
groß ist wie die des kürzeren Wipparms, daß der kürzere Wipparm im oberen Schenkel angeordnet ist und daß
die Feder an einer Spannungs- Einstelleinrichtung angreift, die im zweiten Schenkel angeordnet ist.

Da die Wipparme nicht mehr durch eine Feder miteinander verbunden sind, können sie kürzer ausgeführt werden, sodaß ihre Massen geringer sind. Der gesamte Wippmechanismus kann in identischer Ausbildung für verschiedene Schenkellängen verwendet werden, wodurch sich eine rationellere Herstellung ergibt. Dank der unterschiedlichen Länge der Wipparme und dank der erfindungsgemäßen Anordnung der Wipparme derart, daß der obere Wipparm nach vorn und unten, der untere Wipparm aber nach vorn und oben geneigt ist, jeweils vom hinteren Schwenklager aus gesehen, ergibt sich eine Pendelbewegung des Sägeblattes derart, daß beim abwärtsgehenden Sägeschnitt der obere Bereich des Sägeblattes nach hinten und der untere Bereich nach vorn verschwenkt wird. Dadurch wird eine höhere Sägeleistung und eine bessere Späneabfuhr erzielt. Das Sägeblatt ist leichter durch das Sägegut zu führen, sodaß auch die notwendige Antriebsleistung sinkt.

Besonders vorteilhaft ist erfindungsgemäß eine Ausführung, bei der auch am ersten Wipparm eine am ersten Schenkel gelagerte zweite Feder angreift, deren Kraftrichtung entgegengesetzt zur ersten Feder verläuft. Auch diese zweite Feder ist vorzugsweise an einer Spanneinrichtung angehängt, die stufenlos oder stufenweise betätigbar ist, um die Federspannung zu verändern.
Die beiden Federn können in unterschiedlichen Abständen
von den Schwenklagern der Wipparme angeordnet werden,
sie sind dann jedoch vorzugsweise so bemessen, daß die
von den beiden Federn auf die beiden Wipparme ausgeübten Drehmomente entgegengesetzt wirksam und nach Division
durch den jeweiligen Wipparmradius etwa gleich groß sind,
derart, daß die Wipparmanordnung etwa in der Hubmitte
neutralisiert ist. Die Antriebseinrichtung braucht daher nur sehr geringe Antriebskräfte und eine Erhöhung
der Sägeblattspannung durch Verstellen der beiden Federn wirkt sich praktisch nicht auf die notwendige
Antriebsleistung aus.

Schließlich besteht noch ein Erfindungsmerkmal darin,
daß am Vorderende jedes Wipparms ein Halteelement befestigt ist, in dem sich mindestens ein, vom Sägeblatt
durchsetzter vertikaler Schlitz befindet und daß das
Halteelement des oberen Wipparms in dessen Längsrichtung verstellbar und mit einer Skala versehen ist. Das
Halteelement kann daher stufenlos oder feinstufig verstellt werden, um die Neigung des Sägeblattes dem Sägegut und dem Typ des Sägeblattes anzupassen. Dabei
liegt es im Rahmen der Erfindung anstelle des oberen
Halteelementes das untere Halteelement längsverschiebbar im Wipparm zu lagern.

Das Halteelement hat vorzugsweise eine Platte, in der sich ein von der vorderen Stirnfläche ausgehender Längsschlitz und von beiden Seitenflächen ausgehende Querschlitze befinden. Jedem Schlitz ist eine quer dazu verlaufende Vertiefung zugeordnet, die zur Aufnahme eines an den Enden des Sägeblattes vorgesehenen Stiftes dient. Der Längsschlitz befindet sich in der Wipparmlängsmitte. Wahlweise kann das Sägeblatt in einen der beiden Seitenschlitze eingehängt werden, um in Querrichtung sägen zu können.

Anhand der Zeichnung, die ein Ausführungsbeispiel darstellt, sei die Erfindung näher beschrieben.

Es zeigt

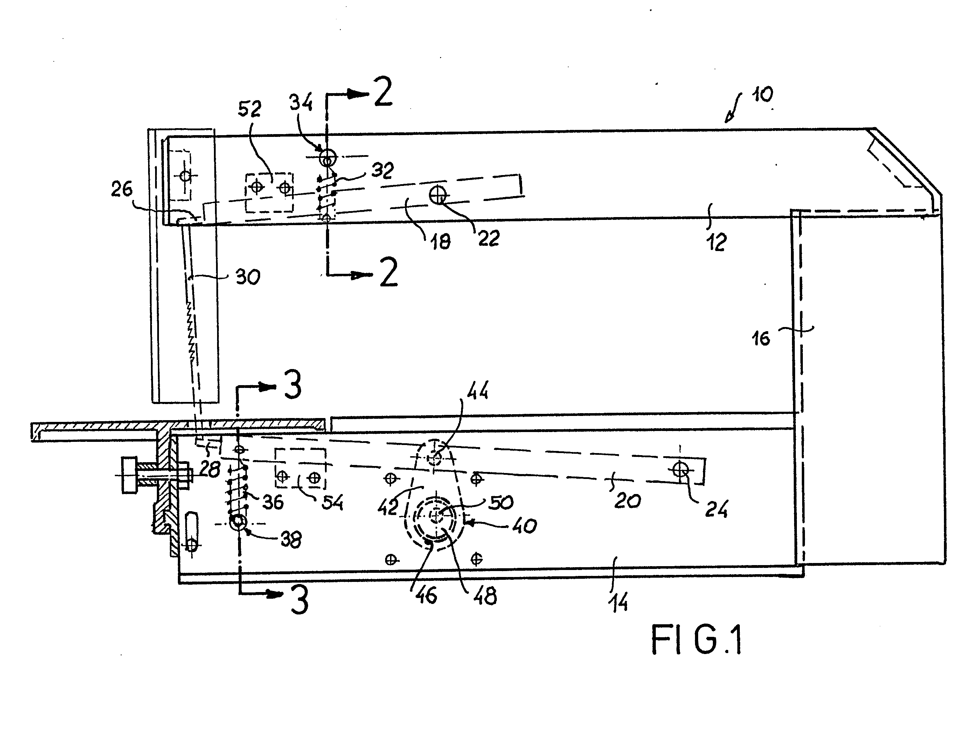

Fig. 1     eine schematische teilweise im Schnitt dargestellte Seitenansicht der neuen Bügelsäge,

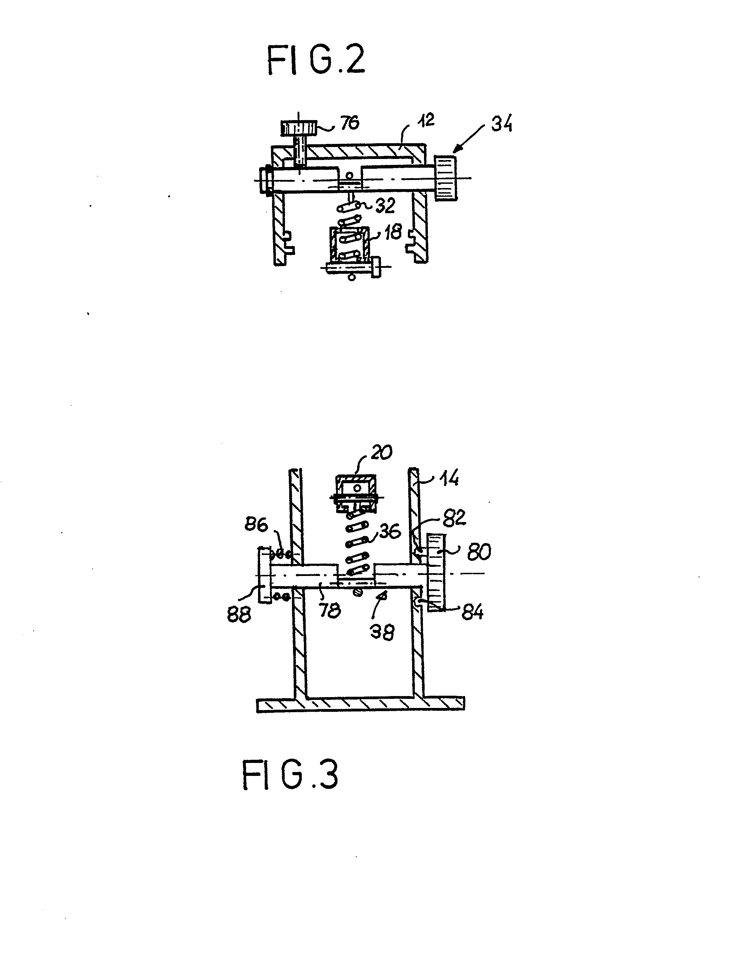

Fig. 2     eine Schnittansicht längs der Linie 2-2 der Fig. 1,

Fig. 3     eine Schnittansicht längs der Linie 3-3 der Fig. 1,

Fig. 4     eine vertikale Schnittansicht durch den Vorderbereich der beiden Wipparme mit Darstellung der Sägeblatthalterung und

Fig. 5     eine Draufsicht auf das Vorderende des oberen Wipparms.

Ein Rahmen 10 weist einen oberen horizontalen Rahmenschenkel 12, einen unteren horizontalen Rahmenschenkel 14 und ein gerades vertikales Joch 16 auf.
Der Rahmen hat damit eine liegende U-förmige Gestalt.
Im oberen Rahmenschenkel 12 ist ein Wipparm 18 und
im unteren Rahmenschenkel 14 ein Wipparm 20 angeordnet. Der obere Wipparm 18 hat ein Schwenklager 22 und
der untere Wipparm 20 ein Schwenklager 24. Die beiden
Rahmenschenkel 12, 14 enden vorn in einer Vertikalebene und die beiden Wipparme 18, 20 reichen bis nahe
an diese Vertikalebene heran. In die beiden Wipparme
18, 20 sind an deren Vorderenden Halteelemente 26,28
befestigt, in denen ein Sägeblatt 30 eingehängt ist.
Die wirksame Länge des oberen Wipparms 18, also der
Abstand zwischen dem Halteelement 26 und dem Schwenklager 22 ist etwa halb so groß wie die entsprechende
wirksame Länge des unteren Wipparms 20, nämlich gemessen zwischen dem Halteelement 28 und dem Schwenklager
24. Angenähert hat also das Schwenklager 24 des unteren Wipparms 20 vom Vorderende des Rahmens 10 einen
doppelt so großen Abstand wie das Schwenklager 22 des
oberen Rahmens 18.

Zwischen dem Halteelement 26 und dem Schwenklager 22
greift am oberen Wipparm 18 eine Zugfeder 32 an, die
an einer im oberen Schenkel 12 gelagerten Spanneinrichtung 34 aufgehängt ist. Ebenfalls zwischen dem
Halteelement 28 und dem Schwenklager 24 des unteren
Wipparms 20 ist eine Zugfeder 36 befestigt, deren
anderes Ende an einer im unteren Schenkel 14 gelagerten Spanneinrichtung 38 befestigt ist. Obwohl die
Feder 36 am unteren Wipphebel 20 viel weiter vorn angreift als die Feder 32 am oberen Wipphebel 18 kann
durch entsprechende Wahl des Federtyps erreicht werden, daß die auf die beiden Wipparme 18, 20 von ihren
Federn ausgeübten Drehmomente jeweils dividiert durch
den wirksamen Wipparmradius entgegengesetzt gleich
oder wenigstens etwa gleich sind. Das Wipparmsystem
wird etwa in einer mittleren Hubstellung im Gleichgewicht gehalten und es sind daher nur geringe Kräfte nötig, um das System in Richtung der Totpunkte
zu bewegen.

Der Antrieb des Wipparmsystems erfolgt mittels einer
Antriebseinrichtung 40, die aus einer gabelartigen Kurbelstange oder Pleuelstange 42 besteht, welche mittels
eines Schwenklagers 44 am unteren Wipparm 20 in dessen
Mittelbereich gelagert ist. Das verbreiterte untere
Ende der Pleuelstange 42 weist eine Bohrung 46 auf, in
welcher eine Buchse 48 gelagert ist, die eine exzentrische Bohrung 50 aufweist in die die Welle eines Antriebsmotors drehfest eingreift. Der Motor wird außenseitig am
unteren Schenkel 14 angeschraubt. Bei Drehung der Motor-

- 8 -

welle wird die Exzenterbuchse 48 mitgedreht und bewirkt über die Pleuelstange 42 ein Auf- und Abwärtsschwenken der beiden Wipparme 18, 20, die in Führungskörpern 52, 54 seitlich geführt sind.

Der obere Wipparm 18 erstreckt sich vom Schwenklager
22 aus gesehen nach vorn und unten, während der untere
Wipparm 20 sich entsprechend nach vorn und oben erstreckt. Dadurch wird beim abwärtsgehenden Arbeitshub
des Sägeblattes 30 der obere Sägeblattbereich nach hinten und der untere Bereich nach vorn bewegt, womit ein
Pendeleffekt erreicht wird, der verglichen mit einer
rein translatorischen Bewegung eine bessere Sägeleistung
ergibt.

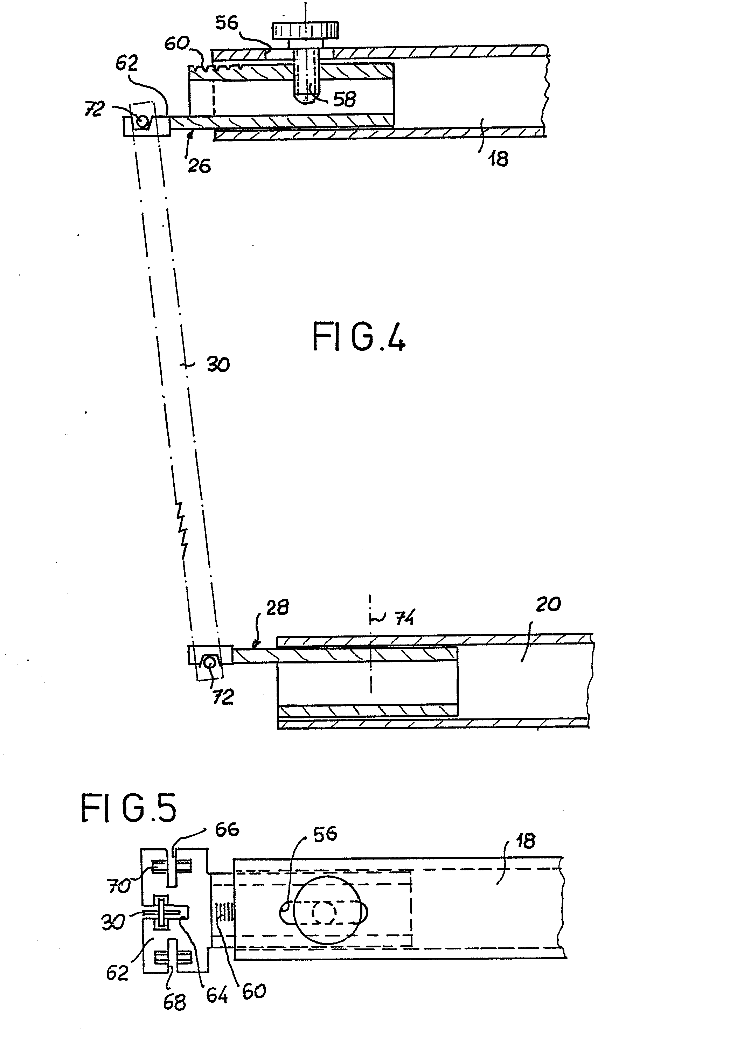

Vorteilhaft ist weiterhin eine leichte Schrägstellung
des Sägeblattes 30, derart, daß das obere Blattende
weiter vorn liegt als das untere Ende. Wie sich aus
Fig. 4 ergibt, läßt sich die Neigung des Sägeblattes
30 einstellen. Zu diesem Zweck ist das obere Halteelement 26 im Wipparm 18 längsverstellbar gelagert.
Die Oberwand des Wipparms 18 hat ein Langloch 56
durch das ein Schraubglied 58 hindurchgreift, das
in ein Gewindeloch der Oberwand des Halteelementes
26 eingeschraubt ist. Dreht man die Schraube 58 um
die Verklemmung zu lösen, so kann man das Halteelement 26 in Längsrichtung verschieben und die jeweilige Schiebestellung an einer Markierungsskala 60 ablesen. In der gewünschten Stellung kann das Halteelement 26 am oberen Wipparm 18 wieder festgeklemmt werden.

Jedes Halteelement 26, 28 hat eine Platte 62, die einen von der vorderen Stirnfläche ausgehenden Längsschlitz 64 und jeweils einen von der Seitenfläche ausgehenden Querschlitz 66 bzw. 68 aufweist. In der Oberwand der oberen Platte 62 und in der Unterwand der unteren Platte sind jeweils rechtwinklig zu den Schlitzen verlaufende muldenförmige Vertiefungen 70 eingeformt, in die die an den Enden des Sägeblattes 30 vorgesehenen Stifte 72 eingreifen. Das Sägeblatt kann also in drei Stellungen eingehängt werden, sodaß wahlweise in Längsrichtung, aber auch von links nach rechts und von rechts nach links gesägt werden kann.

In Fig. 4 ist das untere Halteelement 28 im Wipparm 20 mittels einer Schraube 74 fest verschraubt.

Die auf das Sägeblatt 30 ausgeübte Spannung läßt sich einstellen und zwar mittels einer Spanneinrichtung 34 im oberen Rahmenschenkel 12 oder einer Spanneinrichtung 38 im unteren Rahmenschenkel 14 oder mittels beiden Spanneinrichtungen gelichzeitig. Jede dieser Spanneinrichtungen besteht aus einer Drehwelle mit einem
äußeren Betätigungsrad  und einem exzentrischen Zapfen
oder Stift, an dem die Feder 32 bzw. 36 aufgehängt ist.
Dreht man die Welle der oberen Spanneinrichtung 34, so
kann die Spannung der Feder 32 stufenlos erhöht werden.
Die Welle kann mittels einer Klemmschraube 76 in jeder
beliebigen Stellung festgeklemmt werden. In einer einfachen Ausführung genügt lediglich eine Spanneinrichtung
am nicht angetriebenen Arm. Die jeweils nicht spannbare
andere Feder kann dann an einem rahmenfesten Zapfen
aufgehängt werden. Betätigt man aber beide Spanneinrichtungen 34, 38 synchron, so kann trotz Erhöhung
der Sägeblattspannung das Wipparmsystem 18, 20 im
Gleichgewicht gehalten werden.

Die Spannvorrichtung 38 im unteren Schenkel 14 ist
etwas anders ausgebildet und könnte in gleicher Weise auch anstelle der Spannvorrichtung 34 im oberen
Schenkel angeordnet sein. Die hier ebenfalls verwendete Drehwelle 78 hat an einem Ende den Drehknopf
80, welcher einen nach innen ragenden exzentrischen
Stift 82 aufweist, der in ein Loch 84 eines Lochkranzes in der Seitenwand des Schenkels 14 eingreift und
mittels einer Druckfeder 86 in dieser Stellung gehalten wird, die sich an einem Endflansch 88 der Welle
78 abstützt.

- 1 -

PATENTANSPRÜCHE

1. Tischbügelsäge mit einem, aus zwei horizontalen Schenkeln (12, 14) und einem vertikalen Joch (16) bestehenden U-förmigen Rahmen, in dessen erstem Schenkel (14) eine erster Wipparm (20) und in dessem zweiten Schenkel (12) ein zweiter Wipparm (18) schwenkbar gelagert sind, wobei der erste Wipparm (20) mit einem Exzenteroder Kurbelwellenantrieb (40) in Verbindung steht und an den Vorderenden (26, 28) beider Wipparme (18, 20) ein Sägeblatt eingehängt ist und mit einer an mindestens einem der beiden Wipparme (18, 20) angreifenden Federanordnung (32; 36), welche das im wesentlichen vertikal gehalterte Sägeblatt (30) unter Spannung hält, dadurch gekennzeichnet, daß die zwischen dem Vorderende (28) des Wipparms (20) und dessen Schwenklager (24) gemessene wirksame Länge des einen Wipparms (20) größer als die des anderen Wipparms (18) ist und daß die Federanordnung eine Feder (32) aufweist, deren eines Ende am zweiten Wipparm (18) und deren anderes Ende
am zweiten Schenkel (12) angreift.

2. Tischbügelsäge nach Anspruch 1, dadurch gekennzeichnet, daß die wirksame Länge des längeren
Wipparms (20) etwa doppelt so groß ist wie die
des kürzeren Wipparms (18).

3. Tischbügelsäge nach Anspruch 1 oder 2, dadurch
gekennzeichnet, daß der kürzere Wipparm (18)
im oberen Schenkel (12) angeordnet ist.

4. Tischbügelsäge nach Anspruch 1, dadurch gekennzeichnet, daß die Feder (32) an einer Spannungsverstelleinrichtung (34) angreift, die im zweiten
Schenkel (12) angeordnet ist.

5. Tischbügelsäge nach Anspruch 1, dadurch gekennzeichnet, daß am ersten Wipparm (20) eine am
ersten Schenkel (14) gelagerte zweite Feder (36)
angreift, deren Kraftrichtung entgegengesetzt zur
ersten Feder (32) verläuft.

6. Tischbügelsäge nach Anspruch 5, dadurch gekennzeichnet, daß die zweite Feder (36) an einer Spannungsverstelleinrichtung (38) angreift, die im ersten Schenkel (14) angeordnet ist.


7. Tischbügelsäge nach Anspruch 4 oder 6, dadurch gekennzeichnet, daß die Spannungsverstelleinrichtung (35; 38) aus einer drehbaren Welle (78) besteht, deren Achse parallel zur Wipparm-Schwenkachse (22; 24) angeordnet ist, daß an der Welle (78) ein exzentrischer Zapfen angeordnet ist, an dem die Feder (32; 36) angreift und daß eine Feststelleinrichtung (76; 82, 84, 86, 88) vorgesehen ist, die die Welle (78) in beliebigen Drehstellungen festhält.


8. Tischbügelsäge nach Anspruch 5, dadurch gekennzeichnet, daß die von den beiden Federn (32, 36) auf die beiden Wipparme (18, 20) ausgeübten Drehmomente entgegengesetzt wirksam sind und in umgekehrt proportionalem Verhältnis zu den wirksamen Längen der Wipparme stehen.


9. Tischbügelsäge nach Anspruch 1, dadurch gekennzeichnet, daß am Vorderende jedes Wipparmes (18; 20) ein Halteelement (26; 28) befestigt ist, in dem sich mindestens ein vom Sägeblatt (30) durchsetzter vertikaler Schlitz (64; 66; 68) befindet und daß das Halteelement (26) des oberen Wipparms (18) in dessen Längsrichtung verstellbar und mit einer Skala (60) versehen ist.

10. Tischbügelsäge nach Anspruch 9, dadurch gekennzeichnet, daß jedes Halteelement eine Platte (62) aufweist, in der sich ein von der vorderen Stirnfläche ausgehender Längsschlitz (64) und von beiden Seitenflächen ausgehende Querschlitze (66, 68) befinden.

FIG.1

1/3

008 64 13

## FIG.2

## FIG.3

FIG.4

FIG.5